**Europäisches Patentamt**

**European Patent Office**

**Office européen des brevets**

(19)

(11) Veröffentlichungsnummer: **0 634 447 A1**

# (12) EUROPÄISCHE PATENTANMELDUNG

(21) Anmeldenummer: **94110505.8**

(22) Anmeldetag: **06.07.94**

(51) Int. Cl.⁶: **C08K 5/10**, C08L 29/14, C08F 8/28

(30) Priorität: **16.07.93 DE 4323897**

(43) Veröffentlichungstag der Anmeldung:
**18.01.95 Patentblatt 95/03**

(84) Benannte Vertragsstaaten:
**BE DE FR GB IT NL SE**

(71) Anmelder: **HOECHST AKTIENGESELLSCHAFT**

**D-65926 Frankfurt (DE)**

(72) Erfinder: **Gutweiler, Matthias, Dr.**
**Hintergasse 2**
**D-65232 Taunusstein (DE)**
Erfinder: **Kroggel, Matthias, Dr.**
**Am Flachsland 15**
**D-65779 Kelkheim (DE)**

(54) **Plastifizierte Polymerformkörper aus modifizierten Polyvinylbutyralen.**

(57) Herstellung von plastifizierten Polymerformkörpern aus modifizierten Polyvinylbutyralen (PVB-en), die in der Polymerhauptkette Sulfonatgruppen tragende Monomereinheiten enthalten, durch Acetalisierung von Sulfonatgruppen-haltigen Polyvinylalkoholen oder deren Abmischungen mit Sulfonatgruppen-freien Standardpolyvinylalkoholen, Isolierung der modifizierten Polyvinylbutyrale in fester, feinteiliger Salzform und deren Vermischung mit Weichmachern unter Plastifizierung sowie thermoplastische Formung, vorzugsweise zu Flachfolien. Verwendung der Flachfolien als Zwischenschichtfolien mit verbesserten rheologischen und mechanischen Eigenschaften zur Herstellung von silikatischen Verbundglasscheiben.

EP 0 634 447 A1

Gegenstand der Erfindung sind plastifizierte Polymerformkörper aus modifizierten Polyvinylbutyralen, die in der Polymerhauptkette Sulfonatgruppen tragende Monomereinheiten enthalten und durch Acetalisierung von Sulfonatgruppenhaltigen Polyvinylalkholen bzw. durch Acetalisierung von Abmischungen Sulfonatgruppen-haltiger Polyvinylalkohole mit Sulfonatgruppen-freien Standardpolyvinylalkoholen hergestellt werden. Verwendung der modifizierten Polyvinylbutyrale (PVB-e) in plastifizierter Form als Zwischenschichtfolien mit verbesserten rheologischen und mechanischen Eigenschaften zur Glasverbundherstellung.

Weichmacher-haltige Polyvinylbutyrale werden bekanntlich seit langem in großen Mengen thermoplastisch verarbeitet und insbesondere zu Folien extrudiert, die als Zwischenschichten in mehrschichtigen silikatischen Verbundgläsern, vorzugsweise für Fahrzeugglasscheiben, Architekturgläser für den Bausektor und Panzerglasscheiben, Verwendung finden.

Es ist bekannt, daß die Penetrationsfestigkeit eines fertigen Glasverbundes von den mechanischen Eigenschaften der Verbundfolie beeinflußt wird, so daß möglichst hohe Folienfestigkeiten angestrebt werden.

Es ist weiterhin bekannt, daß das rheologische Verhalten von plastifizierten PVB-Massen bei der Verbundherstellung, insbesondere bei der Vorverbundherstellung, von großer Bedeutung ist. So ist der eigentlichen Verbundherstellung im Autoklaven ein weiterer Prozeßschritt vorgeschaltet. In diesem sogenannten Vorverbundprozeß wird ein Vorlaminat in einer Heizstrecke bei 60 bis 110 °C unter Andruck entlüftet. Die einwandfreie Qualität des so hergestellten Vorlaminates ist Voraussetzung für die Herstellung des Endlaminates im Autoklaven. Das Fließverhalten der Folie im oben erwähnten Temperaturbereich spielt dabei eine entscheidende Rolle. So führt eine zu geringe Fließfähigkeit der Folie zu einem unvollständigen Kontakt zwischen den silikatischen Glasplatten und der Verbundfolie. Dies wird durch Dickenschwankungen der Folie und Glasbiegefehler verursacht, die zu sichtbaren Glasablösungen und Luftblasen führen können.

Zwischen ausreichender Fließfähigkeit der Folie und einer möglichst hohen Folienfestigkeit existiert nun ein Optimierungsproblem. So läßt sich beispielsweise eine erhöhte Folienfestigkeit durch eine Verringerung des Weichmachergehaltes erzielen. Dies führt aber ebenfalls zu einer niedrigeren Fließfähigkeit der Folien. Polyvinylbutyrale mit einem erhöhten Anteil an freien Hydroxylgruppen weisen höhere Folienfestigkeiten auf, zeigen aber ebenfalls reduzierte Fließfähigkeiten. Ein weiterer Nachteil dieser Polyvinylbutyrale mit erhöhtem Hydroxylgruppenanteil ist in einer Unverträglichkeit mit bestimmten Weichmachern, beispielsweise Dihexyladipat, zu sehen, die zum Ausschwitzen des Weichmachers führen kann.

Gesucht werden daher Polyvinylbutyralverbundfolien, die gegenüber bekannten Verbundfolien bessere Folienfestigkeiten aufweisen, ohne daß die Fließfähigkeit im Temperaturbereich des Vorverbundprozesses abnimmt. Es wurde nun überraschenderweise gefunden, daß dies durch Verwendung von Verbundfolien aus plastifizierten Sulfonatgruppen-haltigen Polyvinylbutyralen erreicht werden kann.

In den EP-A 0 368 830, 0 368 831 und 0 368 832 sind seitenkettenständige Sulfonatgruppen enthaltende Polyvinylbutyrale, daraus hergestellte plastifizierte Polyvinylbutyralfolien und Folien aus Blends von Sulfonatgruppen-freien Standardpolyvinylbutyralen und Sulfonatgruppen-haltigen Polyvinylbutyralen beschrieben. Dabei handelt es sich um ionomere Polyvinylbutyrale, die aus Sulfonatgruppen-freien Standardpolyvinylalkoholen durch Acetalisierung mit Sulfonatgruppen-haltigen Aldehyden hergestellt werden. Ein Nachteil ist dabei die Gefahr der Rückspaltung der Sulfonatgruppen-haltigen Aldehyde, die zu unerwünschten Sekundärreaktionen führen kann. Die besonders bevorzugt verwendeten Sulfonatgruppen-haltigen aromatischen Aldehyde vermitteln der Verbundfolie außerdem eine unerwünschte UV-Sensibilität, die bei entsprechender Exposition eines Glasverbundes zu Verfärbungen bzw. zu Abbaureaktionen in der Verbundfolie führen kann. Ein weiterer Nachteil ist der relativ hohe Preis von Sulfonatgruppenhaltigen Aldehyden. Die genannten Nachteile stehen einer großtechnischen Verwendung der genannten Produkte als Verbundfolien in Glasverbundscheiben hinderlich entgegen.

Der Erfindung lag somit die Aufgabe zugrunde, eine Sulfonatgruppen-haltige Polyvinylbutyralverbundfolie zu entwickeln, die oben erwähnten Nachteile vermeidet und durch plastifizierende Extrusion von Weichmacher-haltigen Sulfonatgruppen-haltigen Polyvinylbutyralen beziehungsweise Mischungen von Sulfonatgruppen-haltigen Polyvinylbutyralen mit Sulfonatgruppen-freien Polyvinylbutyralen, die für die Herstellung von Verbundfolien geeignet sind, erhalten werden kann.

Überraschenderweise gelingt dies durch Verwendung von Sulfonatgruppenhaltigen Polyvinylbutyralen, wie sie durch Acetalisierung von Sulfonatgruppenhaltigen Polyvinylalkoholen, die durch radikalische Copolymerisation von vorzugsweise Ethensulfonat und Vinylacetat und anschließende Verseifung der resultierenden Sulfonatgruppen tragenden copolymeren Vinylacetate zu Sulfonatgruppen enthaltenden Polyvinylalkoholen hergestellt werden, erhalten werden.

Die Herstellung dieser Sulfonatgruppen-haltigen Polyvinylalkohole (PVAL-e) ist in der Patentanmeldung EP-A 594 026 ausführlich beschrieben, auf die hiermit Bezug genommen wird.

2

Gegenstand der Erfindung sind daher plastifizierte Polymerformkörper aus Weichmacher-haltigen copolymeren Polyvinylbutyralen (PVB-en) mit Sulfonatgruppen tragenden Comonomereinheiten, die sich von copolymeren Polyvinylalkoholen (PVAL-en) ableiten, die Sulfonatgruppen tragenden Comonomereinheiten in der Salzform enthalten. Vorzugsweise liegen die Sulfonatgruppen tragenden Comonomereinheiten in den Polyvinylbutyralen in Form ihrer Alkalisalze vor.

Die Sulfonatgruppen-haltigen Polyvinylalkohole können vorzugsweise 0,01 bis 25 Gew.-% Sulfonatgruppen tragende Comonomereinheiten, vorzugsweise Ethensulfonat, bezogen auf den Sulfonatgruppen-haltigen PVAL, enthalten, insbesondere 1 bis 10 Gew.-%.

Die Acetalisierung der Sulfonatgruppen-haltigen Polyvinylalkohole erfolgt bevorzugt in wäßriger Lösung durch Umsetzung mit Butyraldehyd in Gegenwart von Säuren zu Sulfonatgruppen-haltigen Polyvinylbutyralen. Hierbei ist es möglich, entweder die Säure dem Polyvinylalkohol-Aldehyd-Gemisch in der wäßrigen Lösung oder den Aldehyd dem Polyvinylalkohol-Säure-Gemisch zuzudosieren. Eintopfreaktionen sind ebenfalls durchführbar, führen allerdings häufig zum Verklumpen des gebildeten Umsetzungsproduktes. Die Sulfonatgruppen-haltigen Polyvinylalkohole, die kettenionomere Makromoleküle darstellen, können auch in Abmischung mit sogenannten Standardpolyvinylalkoholen, die vorzugsweise nichtionomere Sulfonatgruppen-freie Makromoleküle darstellen, zur Acetalisierung eingesetzt werden. Dabei kann der Anteil an solchen Standardpolyvinylalkoholen vorzugsweise bis zu 95 Gew.-%, insbesondere 50 bis 90 Gew.-%, bezogen auf die Gesamtmenge des zu acetalisierenden Sulfonatgruppen-haltigen Polyvinylalkoholgemisches, betragen.

Bevorzugt werden die so hergestellten kettenionomeren Sulfonatgruppen-haltigen Polyvinylbutyrale zur Verwendung für die Verbundfolienherstellung mit einem für die Herstellung von Verbundfolien geeigneten Sulfonatgruppen-freien Polyvinylbutyral abgemischt. Dabei kann der Anteil an kettenionomeren Polyvinylbutyralen vorzugsweise bis zu 60 Gew.-%, insbesondere 2,5 bis 35 Gew.-%, betragen.

Gegenstand der Erfindung ist daher auch ein Verfahren zur Herstellung der plastifizierten Weichmacher-haltigen Sulfonatgruppen tragenden PVB-e durch Acetalisierung der zugrundeliegenden Sulfonatgruppen tragenden Ausgangs-PVAL-e bzw. deren Gemischen mit Sulfonatgruppen-freien Ausgangs-PVAL-en in wäßriger Lösung unter Zusatz von Säurekatalysatoren, vorzugsweise aus der Gruppe Salzsäure, Schwefelsäure, Salpetersäure, Phosphorsäure, insbesondere Phosphorsäure, mit Butyraldehyden, vorzugsweise n-Butyraldehyd. Dabei werden Polyvinylbutyrale unmittelbar in fester neutralisierter Pulverform oder zunächst in wäßriger Dispersionsform und durch anschließenden Wasserentzug, vorzugsweise durch Sprühtrocknung, ebenfalls in fester neutralisierter Pulverform erhalten, getrocknet, gegebenenfalls mit Sulfonatgruppen-freiem PVB vermischt, mit Weichmachern und gegebenenfalls üblichen Stabilisatoren und Hilfsmitteln vermischt und plastifiziert und gegebenenfalls thermoplastisch geformt.

Grundsätzlich sind für die Acetalisierung der aufgeführten Polyvinylalkohole als Katalysatoren alle Säuren einsetzbar, die für die Herstellung bisher bekannter Polyvinylacetale verwendbar sind. Bevorzugt werden für die Acetalisierung starke Säuren, vorzugsweise anorganische Säuren, wie beispielsweise Salzsäure, Phosphorsäure, Schwefelsäure, Salpetersäure, sowie Toluolsulfosäure und Dodecylbenzolsulfosäure, eingesetzt.

Zur Herstellung der Polyvinylbutyrale werden die Sulfonatgruppen-haltigen Polyvinylalkohole bzw. die Mischungen aus Sulfonatgruppen-haltigen Polyvinylalkoholen und Sulfonatgruppen-freien handelsüblichen Standardpolyvinylalkoholen in Wasser gelöst, die Konzentration der Polymerlösungen sollte vorzugsweise zwischen 1 und 50 Gew.-%, insbesondere zwischen 5 und 20 Gew.-%, liegen. Anschließend werden die Polyvinylalkohole der aufgeführten Art nach üblichen Methoden bei üblichen Temperaturen acetalisiert, vorzugsweise durch Zudosieren der Säure zu der den n-Butyraldehyd enthaltenden Polyvinylalkohol-Lösung. Die Säure wird hierbei bevorzugt innerhalb von 5 bis 300 Minuten zudosiert, starkes Rühren ist dabei vorteilhaft. Die Reaktion ist aber auch als Batch-Reaktion durchführbar. Die Menge des zuzusetzenden Aldehyds richtet sich nach dem angestrebten Acetalisierungsgrad. Wegen des im allgemeinen nicht vollständigen Umsatzes des Aldehyds ist dessen Verwendung in geringem Überschuß, bezogen auf den jeweiligen stöchiometrischen Bedarf, bevorzugt.

Besonders bevorzugt wird der Aldehyd in bis zu 10 mol-prozentigem Überschuß, bezogen auf den stöchiometrischen Bedarf, eingesetzt.

In einer besonders bevorzugten Verfahrensvariante wird die Acetalisierung bei Temperaturen zwischen 0 °C und 15 °C in Gang gesetzt, wonach sich das gebildete Polyvinylbutyral, falls es vorzugsweise keine zu hohen Gehalt an Sulfonatgruppen aufweist, alsbald meist pulverförmig abscheidet. Zur Vervollständigung der Reaktion wird das Reaktionsgemisch langsam auf Raumtemperatur erwärmt, und es wird gegebenenfalls eine 1 bis 5 Stunden dauernde Nachreaktion bei höheren Temperaturen, beispielsweise bei 20 bis 80 °C, angeschlossen. Die Menge an verwendeter katalytisch wirkender Säure richtet sich vor allem nach dem angestrebten Acetalisierungsgrad und kann vorzugsweise bis zu 1,1 val, bezogen auf den molaren Vinylalkoholeinheitengehalt, betragen.

Das erhaltene vorzugsweise pulverförmige Polyvinylbutyral wird abgesaugt und mit vollentsalztem Wasser (E-Wasser) gewaschen. Eine vollständige Neutralisation der Säure wird durch eine Nachbehandlung des Polymerisatpulvers in verdünnter Alkalilauge erzielt. Dazu wird im pH-Bereich von 9 bis 13 die Polymerisatsuspension für ca. 1 bis 4 Stunden bei 40 bis 90 °C erhitzt, anschließend erneut abgesaugt, mit Wasser neutral gewaschen und getrocknet.

Bei höheren Sulfonatgehalten der kettenionomeren Polyvinylbutyrale kann es bei der Acetalisierung zu einer Selbstdispergierung des Polymeren kommen. In diesem Falle erfolgt die Neutralisation der Säure direkt im Reaktionsansatz ohne vorhergehende Abtrennung des Polymeren. Die gebildete Sulfonatgruppen-haltige Polyvinylbutyralsuspension wird anschließend durch Sprühtrocknung oder durch Gefriertrocknung oder gegebenenfalls durch Ausfällen mit organischen Lösungsmitteln in eine Pulverform überführt.

Die Sulfonatgruppen-haltigen PVAL-e werden vorzugsweise solchermaßen acetalisiert, daß sie nach der Acetalisierung einen Gehalt an nicht acetalisierten Vinylalkoholeinheiten von vorzugsweise 15 bis 28 Gew.-%, insbesondere 18 bis 24 Gew.-%, bezogen auf das Polyvinylbutyral, aufweisen.

Den Sulfonatgruppen tragenden Polyvinylbutyralen liegen vorzugsweise Gemische aus Sulfonatgruppen tragenden Polyvinylalkoholen und Sulfonatgruppenfreien Polyvinylalkoholen zugrunde. Der Anteil an Sulfonatgruppen tragenden PVAL-en beträgt vorzugsweise 2,5 bis 35 Gew.-%, insbesondere 2,5 bis 60 Gew.-%, bezogen auf die Gesamtmenge der PVAL-Ausgangskomponenten. Ferner beträgt der $-SO_3^-$-Anteil aus den Sulfonatgruppen in den den Sulfonatgruppen tragenden Polyvinylbutyralen zugrunde liegenden copolymeren Ausgangs-PVAL-en bzw. deren Mischungen mit Sulfonatgruppen-freien PVAL-en mindestens 1,5 Gew.-% $-SO_3^-$, vorzugsweise 2,5 bis 8 Gew.-% $-SO_3^-$, insbesondere 3 bis 7 Gew.-% $-SO_3^-$, bezogen auf das Gewicht des wasserfreien copolymeren Sulfonatgruppen enthaltenden Ausgangs-PVAL-s bzw. dessen wasserfreien Mischungen mit Sulfonatgruppen-freien PVAL-en.

Die den Polyvinylbutyralen zugrunde liegenden und Sulfonatgruppen tragenden Ausgangs-PVAL-e werden vorzugsweise durch Hydrolyse oder Alkoholyse von copolymeren hydrolysierbaren Polyvinylestern, vorzugsweise Polyvinylacetaten, die Sulfonatgruppen tragende Comonomereinheiten, vorzugsweise Ethensulfonateinheiten, enthalten, oder gegebenenfalls deren Mischungen mit Sulfonatgruppen-freien hydrolysierbaren Polyvinylestern, vorzugsweise Polyvinylacetaten, erhalten, die Hydrolysegrade von mindestens 70 Mol-%, vorzugsweise bis zu 100 Mol-%, insbesondere 84 bis 99 Mol-%, bezogen auf die Molzahl der verseifbaren Vinylestereinheiten in den Ausgangspolyvinylestern, aufweisen, der Acetalisierungsgrad der Polyvinylbutyrale vorzugsweise bis zu 86 Mol-%, insbesondere 60 bis 80 Mol-%, bezogen auf die Gesamtmolzahl an acetalisierbaren Vinylalkoholeinheiten im Ausgangs-PVAL, beträgt, die Viskosität der 4 Gew.-%igen wäßrigen Ausgangs-PVAL-Lösungen im Bereich von 2 bis 100 mPa•s, vorzugsweise 2 bis 70 mPa•s, insbesondere 3 bis 60 mPa•s, ermittelt im Höppler-Viskosimeter nach DIN 53015 bei 20 °C, liegt und die Viskosität der Weichmacher-freien Polyvinylbutyrale, ermittelt an 5 Gew.-%igen ethanolischen PVB-Lösungen im Höppler-Viskosimeter nach DIN 53015 bei 23 °C, im Bereich von 50 bis 80 mPa•s liegt.

Die Sulfonatgruppen-haltigen Polyvinylbutyrale beziehungsweise deren erfindungsgemäße Mischungen mit handelsüblichen Sulfonatgruppen-freien Polyvinylbutyralen eignen sich in Abmischung mit Weichmachern und Plastifizierung überraschend vorteilhaft zur Herstellung von Glasverbundfolien. Bei den handelsüblichen Sulfonatgruppen-freien Polyvinylbutyralen für die Verbundfolienherstellung handelt es sich um Polymerisate mit einem Restvinylalkoholeinheitengehalt von 18 bis 24 Gew.-%, deren Viskositäten der 5 Gew.-%igen ethanolischen PVB-Lösungen, gemessen nach DIN 53015, bei 23 °C, im Bereich von 50 bis 80 mPa•s liegen.

Als Weichmacher einsetzbar sind grundsätzlich alle für handelsübliche Polyvinylbutyrale einsetzbaren Weichmacher, beispielsweise Ester des Triethylenglykols, vorzugsweise Adipinsäure-, Phthalsäure-, Phosphorsäure-Ester. Bevorzugt ist der 2-Ethylbuttersäure- und der n-Heptansäureester des Triethylenglykols, besonders bevorzugt ist Di-n-hexyladipat.

Die Weichmacher werden in den üblichen Mengen eingesetzt, die Polmerisat/Weichmachergemische können also vorzugsweise 20 bis 50 Gew.-%, insbesondere 23 bis 35 Gew.-%, Weichmacher enthalten.

Der Gehalt an Sulfonatgruppen in der Polymerisat/Weichmacher-Mischung kann vorzugsweise 0,01 bis 5 Gew.-%, insbesondere 0,1 bis 2,5 Gew.-%, betragen.

Die erfindungsgemäßen Weichmacher-haltigen Polyvinylbutyralmassen werden vorzugsweise durch Extrusion unter Plastifizierung zu Folien verarbeitet, die sich vorteilhaft als Zwischenlagenfolien zur Herstellung von silikatischen Verbundglasscheiben eignen. Vorzugsweise wird die Polymerisat/Weichmacher-Mischung durch eine Breitschlitzdüse zu einer 0,2 bis 2 mm, vorzugsweise 0,3 bis 0,8 mm, dicken Flachfolie extrudiert. Dabei liegt die Extrusionstemperatur im üblichen Bereich, vorzugsweise zwischen 140 und 230°C., Kurzzeitig können auch höhere Temperaturen erreicht werden, ohne daß Zersetzungen oder Verfärbungen der Folien auftreten. Die Polymerisat/Weichmacher-Formmasse kann übliche Zusätze enthalten, beispielsweise geringe Mengen an Alkali, vorzugsweise 0,001 bis 0,1 Gew.-%, bezogen auf die Formmasse, Alkalihydroxid oder alkalisch reagierendes Alkalisalz, ferner bekannte Antihaftmittel, beispielsweise Salze von Carbonsäuren, insbesondere Kalium- und Magnesiumsalze der Ameisensäure oder der Essigsäure oder Salze von Dicarbonsäuren, sowie bestimmte Silane oder Siloxane. Die Konzentration an diesen Antihaftmitteln liegt vorzugsweise zwischen 0,001 und 0,2 Gew.-%, bezogen auf die Polymer/Weichmacher-Formmasse. Als zusätzliche Additive, die in den erfindungsgemäßen Weichmacher-haltigen Polyvinylbutyralmassen enthalten sein können, seien genannt Stabilisatoren, beispielsweise Emulgatoren, Schutzkolloide, Licht-(UV)-Stabilisatoren sowie Hilfsmittel, beispielsweise Füllstoffe, Pigmente, Farbstoffe, Lösemittel, Filmbildehilfsmittel.

Gegenstand der Erfindung sind daher auch plastifizierte Polymerformkörper, dadurch gekennzeichnet, daß sie vorzugsweise 20 bis 50 Gew.-%, insbesondere 23 bis 35 Gew.-%, bezogen auf das PVB, Weichmacher aus der Gruppe Diester des Di-, Tri- oder Tetraethylenglykols mit aliphatischen ($C_6$-$C_{10}$)-Carbonsäuren, Diester von ($C_2$-$C_{12}$)-Dicarbonsäuren, vorzugsweise von Adipin-, Sebazin- oder Phthalsäure, mit aliphatischen ($C_4$-$C_{10}$)-Alkoholen, aliphatische Ester von Fettsäuren mit insgesamt bis zu 40 Kohlenstoff-Atomen, besonders bevorzugt Dihexyladipat, enthalten und vorzugsweise in Form von Flachfolien mit einer Dicke von vorzugsweise 0,2 bis 2 mm, insbesondere 0,3 bis 0,8 mm, vorliegen, die übliche Stabilisatoren, Antihaftmittel und Lichtstabilisatoren in den erforderlichen Mengen enthalten können.

Erfindungsgemäß hergestellte Sulfonatgruppen-haltige und plastifizierte Polyvinylbutyralfolien weisen gegenüber einer Vergleichsfolie, hergestellt aus handelsüblichem Sulfonatgruppen-freiem PVB, mit steigendem Sulfonatgruppengehalt eine Zunahme der Fließfähigkeit bei 100 °C auf. Meßgröße ist dabei der MFI 21,6 kg/100 °C, gemessen mit einer 2 mm Düse an einem Göttfert Schmelzindexprüfgerät Typ 011.5 (MFI = melt flow index).

Erfindungsgemäße plastifizierte Sulfonatgruppen-haltige Polyvinylbutyralfolien zeigen gegenüber den Sulfonatgruppen-freien Vergleichsfolien trotz des Anstiegs der Fließfähigkeit bei 100 °C eine Zunahme der Folienfestigkeit, die sich als Zunahme der Zugspannung bei 150 % bzw. 200 % Dehnung an den Extrusionsfolien äußert und messen läßt.

Damit zeigen erfindungsgemäße Sulfonatgruppen-haltige Polyvinylbutyralfolien ein Eigenschaftsbild, das sie für den Einsatz als Glasverbundfolien besonders gut geeignet erscheinen läßt.

Gegenstand der Erfindung ist daher auch die Verwendung der plastifizierten Polymerformkörper vorzugsweise in Form von durch thermoplastische Verformung hergestellten Flachfolien mit einer Dicke von vorzugsweise 0,2 bis 2 mm, insbesondere 0,3 bis 0,8 mm, als Zwischenlagenfolien bei der Herstellung von Mehrschicht-Verbundglasscheiben, vorzugsweise silikatischen Scheiben, vorzugsweise in Form von Fahrzeugscheiben, Schiffsglasscheiben, Flugzeugglasscheiben, Architekturglasscheiben für den Bausektor, Sicherheitsglasscheiben und Panzerglasscheiben.

Die Erfindung wird durch die nachfolgenden Beispiele näher erläutert.

**Beispiel 1**

**Herstellung eines Sulfonatgruppen enthaltenden Polyvinylbutyrals**

In einem Reaktionsgefäß mit Rührer und Rückflußkühler werden unter Stickstoff 1120 g eines Monomereinheiten aus Ethensulfonat enthaltenden copolymeren Polyvinylalkohols (PVAL) (Hydrolysegrad (HG): 96,7 %, Gehalt an Ethensulfonat-Natriumsalz: 10,2 Gew.-% ($\triangleq$ 6,3 Gew.-% $SO_3^-$), Viskosität der 4 Gew.-%igen wäßrigen Lösung bei 20 °C: 4,4 mPa•s) und 280 g handelsüblicher Sulfonatgruppen-freier PVAL (®Mowiol 4-98 der Fa. Hoechst AG, Viskosität: 4 mPa•s, Hydrolysegrad: 98 %) in 5600 g Wasser bei 90 °C gelöst. Der $SO_3^-$-Gehalt der PVAL-Mischung beträgt 5 Gew.-%.

Anschließend kühlt man die Lösung auf 1 °C, setzt 66 g 85 Gew.-%ige Phosphorsäure zu und dosiert innerhalb von 2 Stunden 721 g n-Butyraldehyd solchermaßen zu, daß die Temperatur 2,5 °C nicht übersteigt. Danach wird das Reaktionsgemisch innerhalb von 3 Stunden auf 37 °C erwärmt und anschließend 2 Stunden lang bei 37 °C nachreagieren lassen. Anschließend wird die Mischung mit wäßriger NaOH auf einen pH-Wert von 6,5 eingestellt. Die erhaltene Dispersion besitzt einen Feststoffgehalt von 22,78 Gew.-%. Der mittlere Teilchendurchmesser der Dispersion beträgt 0,88 $\mu$m [5]. Die minimale Filmbildetemperatur (MFT) beträgt 11 °C.

Das entstandene Polyvinylbutyral läßt sich nach Gefriertrocknung in Form eines farblosen Pulvers isolieren und besteht zu 73,3 Gew.-% aus n-Butyraleinheiten, zu 18,9 Gew.-% aus Vinylalkoholeinheiten[1], zu 6,6 Gew.-% aus Ethensulfonateinheiten[3] und zu 1,2 Gew.-% aus Vinylacetateinheiten[2].

**Beispiel 2**

**Herstellung eines Sulfonatgruppen enthaltenden Polyvinylbutyrals**

In einem Reaktionsgefäß mit Rührer und Rückflußkühler werden unter Stickstoff 240 g eines Monomereinheiten aus Ethensulfonat enthaltenden copolymeren Polyvinylalkohols (PVAL) (Hydrolysegrad (HG): 97,5 %, Gehalt an Ethensulfonat-Natriumsalz: 5,73 Gew.-% ($\triangleq$ 3,54 Gew.-% $SO_3{}^-$), Viskosität der 4 Gew.-%igen wäßrigen Lösung bei 20 °C: 5,6 mPa•s) in 2160 g Wasser bei 90 °C gelöst. Anschließend kühlt man die Lösung auf 1 °C, setzt 12,8 g 85 Gew.-%ige Phosphorsäure zu und dosiert innerhalb von 2 Stunden 125,2 g n-Butyraldehyd derart zu, daß die Temperatur 2,5 °C nicht übersteigt. Danach wird das Reaktionsgemisch innerhalb von 3 Stunden auf 30 °C erwärmt und anschließend 2 Stunden lang bei 30 °C nachreagieren lassen.

Das in feinteiliger fester Form ausgefallene Polyvinylbutyral wird abgesaugt, mit entsalztem Wasser gewaschen und eine Stunde lang in wäßriger Alkalilauge bei pH 11 gerührt. Anschließend wird das Polyvinylbutyral erneut abgesaugt, mit entsalztem Wasser neutral gewaschen und bei 50 °C unter Vakuum getrocknet.

Das entstandene Polyvinylbutyral wird in Form eines farblosen Pulvers erhalten und besteht zu 74,1 Gew.-% aus n-Butyraleinheiten[2], zu 20,8 Gew.-% aus Vinylalkoholeinheiten[1], zu 4,1 Gew.-% aus Ethensulfonateinheiten[3] und zu 1,0 Gew.-% aus Vinylacetateinheiten[4].

**Fußnoten:**

[1)2)3)] Berechnet mittels des $SO_3{}^-$ Gehaltes der Ausgangs-Polyvinylalkohole und des durch Analyse bestimmten Restvinylacetatgehaltes der Acetale unter Annahme eines 100 %igen Aldehyd-Umsatzes (der Restbutyraldehydgehalt der Dispersionen wird mittels GC in allen Fällen zu < 0,2 Gew.-% bestimmt).
[4)] Ermittelt durch Hydrolyse der Vinylacetateinheiten mit überschüssigem Alkali und Rücktitration.
[5)] Ermittelt mit Argon-Xenon-Laser Aerosol-Spektroskopie.

**Beispiele 3 bis 9**

**Herstellung von plastifizierten Polymerformkörpern aus Weichmacherhaltigen Sulfonatgruppen enthaltenden Polyvinylbutyralen und deren Ausprüfung als Verbundglaszwischenlagenfolien**

**Beispiel 3 bis 5**

Pulverförmiges Sulfonatgruppen enthaltendes Polyvinylbutyral (PVB) aus Beispiel 2 mit einem Gehalt an Vinylalkoholeinheiten von 20,8 Gew.-% und einem Gehalt an Ethensulfonateinheiten von 4,1 Gew.-% wird mit handelsüblichem pulverförmigen Sulfonatgruppen-freiem Standardpolyvinylbutyral (Standard-PVB1) mit einem Gehalt an Vinylalkoholeinheiten von 19,9 Gew.-% in den nachstehenden Mengenverhältnissen vermischt. Das Mischungsverhältnis von "PVB aus Beispiel 2" zu "Standard-PVB1", berechnet in Gew.-% und bezogen auf die Mischungen, beträgt in Beispiel 3 = 10:90, in Beispiel 4 = 20:80 und in Beispiel 5 = 30:70. Den pulverförmigen PVB-Gemischen der Beispiele 3 bis 5 werden als Weichmacher in einem ®Brabender Mischer jeweils 26 Gew.-%, bezogen auf die Weichmacher-haltige Mischung, Triethylenglykoldi-n-heptanoat unter Plastifizierung der Mischungen beigemischt und die Mischungen in einem ®Haake Doppelschnekkenextruder bei einer Massetemperatur von 200 °C zu 0,76 mm dicken Flachfolien extrudiert. Die erhaltenen Flachfolien werden bezüglich ihrer Verwendbarkeit als Glasverbundzwischenlagenfolien geprüft, und zwar unter anderem auf ihre Fließfähigkeit bei 100 °C (MFI 21,6 kg/100 °C, 2 mm Düse) und ihr Dehnungsverhalten durch Ermittlung der Zugspannung bei 150 % und 200 % Dehnung der Folien aus einem Zug-Dehnungs-Diagramm, gemessen mit einem 2 Instron-Meßgerät. Das Ergebnis ist in der Tabelle 1 zusammengefaßt wiedergegeben.

**Vergleichsbeispiel 1**

Es wird wie in den Beispielen 3 bis 5 beschrieben verfahren mit der Abänderung, daß als Polyvinylbutyral vergleichsweise nur Sulfonatgruppen-freies "Standard-PVB1" eingesetzt wird, dem 26 Gew.-%, bezogen auf die Weichmacher-haltige Mischung, des in den Beispielen 3 bis 5 genannten Weichmachers beigemischt werden. Die Ausprüfung der resultierenden Flachfolie erfolgt wie in den Beispielen 3 bis 5 beschrieben. Das Ergebnis ist in der Tabelle 1 zusammengefaßt wiedergegeben.

## Tabelle 1: Folienprüfung

| Flachfolie<br>0,76 mm dick, aus | Beispiel 3 | Beispiel 4 | Beispiel 5 | Vergleich-<br>beispiel 1 |
|---|---|---|---|---|
| MFI 21,6 kg/100 °C<br>2 mm Düse | 327 mg/10 min | 484 mg/10 min | 507 mg/10 min | 252 mg/10 min |
| Zugspannung bei | | | | |
| 150 % | 7,2 MPa | 7,5 MPa | 8 MPa | 4,7 MPa |
| 200 %<br>Dehnung der Folie | 13,7 MPa | 13,6 MPa | 13,6 MPa | 9,7 MPa |

Wie die Ergebnisse der Beispiele 3 bis 5 zeigen, steigt trotz starker Zunahme der Fließfähigkeit der Folien bei 100 °C (vgl. MFI-Werte) die Zugspannung der Folien überraschenderweise ebenfalls stark an, obwohl sie erwartungsgemäß hätte abfallen sollen. Diese unerwartete Eigenschaft läßt die erfindungsgemäßen Sulfonatgruppen enthaltenden plastifizierten Polyvinylbutyralfolien für die Verwendung als Glasverbundzwischenlagenfolien besonders gut geeignet erscheinen.

**Beispiel 6 bis 9**

Pulverförmiges Sulfonatgruppen enthaltendes Polyvinylbutyral (PVB) aus Beispiel 1 mit einem Gehalt an Vinylalkoholeinheiten von 18,9 Gew.-% und einem Gehalt an Ethensulfonateinheiten von 6,6 Gew.-% wird mit handelsüblichem pulverförmigen Sulfonatgruppen-freiem Standardpolyvinylbutyral (PVB2) mit einem Gehalt an Vinylalkoholeinheiten von 20,45 Gew.-% in den nachstehenden Mengenverhältnissen vermischt. Das Mischungsverhältnis von "PVB aus Beispiel 1" zu "Standard-PVB2", berechnet in Gew.-% und bezogen auf die Mischung, beträgt in Beispiel 6 = 2,5:97,5, in Beispiel 7 = 5:95, in Beispiel 8 = 10:90 und in Beispiel 9 = 20:80.

Den pulverförmigen PVB-Gemischen der Beispiele 6 bis 9 werden als Weichmacher in einem Brabander Mischer jeweils 24,5 Gew.-%, bezogen auf die Weichmacher-haltige Mischung, Dihexyladipat unter Plastifizierung der Mischungen beigemischt und die Mischungen in einem Haake Doppelschneckenextruder bei einer Massetemperatur von 200 °C zu 0,76 mm dicken Flachfolien extrudiert. Die erhaltenen Flachfolien werden bezüglich ihrer Verwendbarkeit als Glasverbundzwischenlagenfolien in analoger Weise wie in den Beispielen 1 bis 3 beschrieben geprüft. Das Ergebnis ist in der Tabelle 2 zusammengefaßt wiedergegeben.

**Vergleichsbeispiel 2**

Es wird wie in den Beispielen 6 bis 9 beschrieben verfahren mit der Abänderung, daß als Polyvinylbutyral vergleichsweise nur Sulfonatgruppen-freies "Standard-PVB2" eingesetzt wird, dem 24,5 Gew.-%, bezogen auf die Weichmacher-haltige Mischung, des in den Beispielen 6 bis 9 genannten Weichmachers beigemischt werden. Die Ausprüfung der resultierenden Flachfolie erfolgt wie in den Beispielen 3 bis 5 beschrieben. Das Ergebnis ist in der Tabelle 2 zusammengefaßt wiedergegeben.

## Tabelle 2: Folienprüfung

| Flachfolie<br>0,76 mm dick, aus | Beispiel 6 | Beispiel 7 | Beispiel 8 | Beispiel 9 | Vergleichs-<br>beispeil 1 |
|---|---|---|---|---|---|
| MFI 21,6 kg/100°C<br>2 mm Düse | 226mg/10min | 251mg/10min | 339mg/10min | 745mg/10min | 211mg/10min |
| Zugspannung bei | | | | | |
| 150 % | 9,1 MPa | 9,5 MPa | 10,7 MPa | 10,2 MPa | 8,0 MPa |
| 200 % | 16,8 MPa | 16,9 MPa | 17,3 MPa | 16,2 MPa | 15,3 MPa |
| Dehnung der Folie | | | | | |

Wie die Ergebnisse der Beispiele 6 bis 9 zeigen, ist die Differenz der Zugspannungswerte vergleichsweise zu dem Vergleisbeispiel 2 zwar geringer als in Tabelle 1, da infolge des geringeren Weichmacheranteils ein höheres Zugspannungswertniveau in dem Vergleisbeispiel 2 vorliegt als in dem Vergleichsbeispiel 1. Die Zugspannungswerte sind jedoch ebenfalls besser als diejenigen von Vergleichsbeispiel 2. Die Fließfähigkeit der Folien bei 100 °C (vgl. MFI-Werte) ist jedoch überraschenderweise und vorteilhafterweise in den Beispielen 8 und 9 noch sehr viel stärker angestiegen als bei den entsprechenden Beispielen 3 und 4, was als weiterer Vorteil bei der Verwendung der Flachfolien als Glasverbundzwischenlagenfolien angesehen werden kann.

**Patentansprüche**

1. Plastifizierte Polymerformkörper aus Weichmacher-haltigen copolymeren Polyvinylbutyralen (PVB-en) mit Sulfonatgruppen tragenden Comonomereinheiten, die sich von copolymeren Polyvinylalkoholen (PVAL-en) ableiten, die Sulfonatgruppen tragenden Comonomereinheiten in der Salzform enthalten.

2. Plastifizierte Polymerformkörper nach Anspruch 1, dadurch gekennzeichnet, daß sich die Sulfonatgruppen tragenden Polyvinylbutyrale von Sulfonatgruppen tragenden Polyvinylalkoholen (PVAL-en) ableiten, die 0,01 bis 25 Gew.-%, bezogen auf den PVAL, Sulfonatgruppen tragende Comonomereinheiten enthalten.

3. Plastifizierte Polymerformkörper nach Anspruch 1, dadurch gekennzeichnet, daß der den Sulfonatgruppen tragenden Polyvinylbutyralen zugrunde liegende PVAL Comonomereinheiten aus Ethensulfonat enthält.

4. Plastifizierte Polymerformkörper nach Anspruch 1, dadurch gekennzeichnet, daß die Sulfonatgruppen tragenden Comonomereinheiten in den Polyvinylbutyralen in Form ihrer Alkalisalze vorliegen.

5. Plastifizierte Polymerformkörper nach Anspruch 1, dadurch gekennzeichnet, daß sie 20 bis 50 Gew.-%, bezogen auf das PVB, Weichmacher aus der Gruppe Diester des Di-, Tri- oder Tetraethylenglykols mit aliphatischen ($C_6$-$C_{10}$)-Carbonsäuren, Diester von ($C_2$-$C_{12}$)-Dicarbonsäuren mit aliphatischen ($C_4$-$C_{10}$)-Alkoholen, aliphatische Ester von Fettsäuren mit insgesamt bis zu 40 Kohlenstoff-Atomen enthalten.

6. Plastifizierte Polymerformkörper nach Anspruch 1, dadurch gekennzeichnet, daß sie in Form von Flachfolien mit einer Dicke von 0,2 bis 2 mm vorliegen, die übliche Stabilisatoren, Antihaftmittel und Lichtstabilisatoren in den erforderlichen Mengen enthalten können.

7. Plastifizierte Polymerformkörper nach Anspruch 1, dadurch gekennzeichnet, daß sich die Sulfonatgruppen tragenden Polyvinylbutyrale von Gemischen aus Sulfonatgruppen tragenden Polyvinylalkoholen und Sulfonatgruppen-freien Polyvinylalkoholen herleiten und der Anteil an Sulfonatgruppen tragenden PVAL-en 2,5 bis 35 Gew.-%, bezogen auf die Gesamtmenge der PVAL-Ausgangskomponenten, beträgt.

8. Plastifizierte Polymerformkörper nach Anspruch 1, dadurch gekennzeichnet, daß der -$SO_3^-$-Anteil aus den Sulfonatgruppen in den den Sulfonatgruppen tragenden Polyvinylbutyralen zugrunde liegenden copolymeren Ausgangs-PVAL-en oder deren Mischungen mit Sulfonatgruppen-freien PVAL-en mindestens 1,5 Gew.-% -$SO_3^-$, bezogen auf das Gewicht des wasserfreien copolymeren Sulfonatgruppen enthaltenden Ausgangs-PVAL-s oder dessen wasserfreien Mischungen mit Sulfonatgruppen-freien PVAL-en, beträgt.

9. Plastifizierte Polymerformkörper nach Anspruch 1, dadurch gekennzeichnet, daß die den Polyvinylbutyralen zugrunde liegenden und Sulfonatgruppen tragenden Ausgangs-PVAL-e durch Hydrolyse oder Alkoholyse von copolymeren hydrolysierbaren Polyvinylestern, die Sulfonatgruppen tragende Comonomereinheiten enthalten, oder gegebenenfalls deren Mischungen mit Sulfonatgruppen-freien hydrolysierbaren Polyvinylestern erhalten werden und Hydrolysegrade von mindestens 70 Mol-%, bezogen auf die Molzahl der verseifbaren Vinylestereinheiten in den Ausgangspolyvinylestern, besitzen, der Acetalisierungsgrad der Polyvinylbutyrale bis zu 86 Mol-%, bezogen auf die Gesamtmolzahl an acetalisierbaren Vinylalkoholeinheiten im Ausgangs-PVAL, beträgt, die Viskosität der 4 Gew.-%igen wäßrigen Ausgangs-PVAL-Lösungen im Bereich von 2 bis 100 mPa•s, ermittelt im ®Höppler-Viskosimeter nach DIN 53015 bei 20 °C, liegt und die Viskosität der Weichmacher-freien Polyvinylbutyrale, ermittelt an 5 Gew.-%igen ethanolischen PVB-Lösungen im Höppler-Viskosimeter nach DIN 53015 bei 23 °C, im Bereich von 50 bis 80 mPa•s liegt.

10. Plastifizierte Polymerformkörper nach Anspruch 1, dadurch gekennzeichnet, daß der Gehalt der Polyvinylbutyrale an nicht acetalisierten Vinylalkoholeinheiten 15 bis 28 Gew.-%, bezogen auf das PVB, beträgt.

11. Verfahren zur Herstellung von plastifizierten Polymerformkörpern nach Anspruch 1, dadurch gekennzeichnet, daß die Herstellung der PVB-e durch Acetalisierung der zugrunde liegenden Sulfonatgruppen tragenden Ausgangs-PVAL-e oder deren Gemischen mit Sulfonatgruppen-freien Ausgangs-PVAL-en in wäßriger Lösung unter Zusatz von Säurekatalysatoren, mit Butyraldehyden, erfolgt und die Polyvinylbutyrale unmittelbar in fester neutralisierter Pulverform oder zunächst in wäßriger Dispersionsform und durch anschließenden Wasserentzug, ebenfalls in fester neutralisierter Pulverform erhalten, getrocknet, gegebenenfalls mit Sulfonatgruppen-freiem PVB vermischt, mit Weichmachern und gegebenenfalls üblichen Stabilisatoren und Hilfsmitteln vermischt und plastifiziert und thermoplastisch geformt werden.

12. Verwendung der plastifizierten Polymerformkörper nach Anspruch 1 in Form von durch thermoplastische Verformung hergestellten Flachfolien mit einer Dicke von 0,2 bis 2 mm als Zwischenlagenfolien bei der Herstellung von Mehrschicht-Verbundglasscheiben, vorzugsweise silikatischen Scheiben, in Form von Fahrzeugscheiben, Schiffsglasscheiben, Flugzeugglasscheiben, Architekturglasscheiben für den Bausektor, Sicherheitsglasscheiben und Panzerglasscheiben.

Europäisches
Patentamt

**EUROPÄISCHER RECHERCHENBERICHT**

Nummer der Anmeldung

EP 94 11 0505

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,P, X | EP-A-0 594 026 (HOECHST AG) <br><br> * Seite 2, Spalte 2, Zeile 41 - Seite 3, Spalte 1, Zeile 13 * <br> * Seite 5, Spalte 8, Zeile 56 - Seite 6, Spalte 9, Zeile 19 * <br> * Ansprüche 1,7,15-17 * <br> * Seite 7, Spalte 11, Zeile 53 - Zeile 57 * <br><br> --- | 1-5,8-12 | C08K5/10 <br> C08L29/14 <br> C08F8/28 |
| A | US-A-4 968 743 (A. MISRA ET AL.) <br><br> * Spalte 7, Zeile 49 - Spalte 9, Zeile 7 * <br> * Ansprüche 1-3,9; Beispiele 2,3 * <br> ----- | 1,7,9, 11,12 | |
| | | | **RECHERCHIERTE SACHGEBIETE (Int.Cl.6)** <br><br> C08K <br> C08L <br> C08F |

Der vorliegende Recherchenbericht wurde für alle Patentansprüche erstellt

| Recherchenort | Abschlußdatum der Recherche | Prüfer |
|---|---|---|
| DEN HAAG | 26. Oktober 1994 | Engel, S |